(19) Europäisches Patentamt

European Patent Office

Office européen des brevets

(11) Veröffentlichungsnummer: **0 427 879 B1**

(12) **EUROPÄISCHE PATENTSCHRIFT**

(45) Veröffentlichungstag der Patentschrift: **29.12.93**

(51) Int. Cl.⁵: **H05B 6/06**

(21) Anmeldenummer: **89121004.9**

(22) Anmeldetag: **13.11.89**

Die Akte enthält technische Angaben, die nach dem Eingang der Anmeldung eingereicht wurden und die nicht in dieser Patentschrift enthalten sind.

(54) **Vorrichtung und Verfahren zum induktiven Erwärmen von Werkstücken.**

(43) Veröffentlichungstag der Anmeldung:
**22.05.91 Patentblatt 91/21**

(45) Bekanntmachung des Hinweises auf die Patenterteilung:
**29.12.93 Patentblatt 93/52**

(84) Benannte Vertragsstaaten:
**AT BE CH DE ES FR GB IT LI**

(56) Entgegenhaltungen:
**EP-A- 0 251 333**
**DE-A- 3 625 011**
**US-A- 3 746 825**

**REVUE GENERALE DE L'ELECTRICITE. no. 2, Februar 1988, PARIS FR Seiten 55 - 62; J.P. Ferrieux et al.: "A Series-Resonant Inverter for Induction Heating."**

**ELECTRICITY AND MODERN PHYSICS, G.A.G. Bennet, 2. Auflage (1974), Seite 94**

(73) Patentinhaber: **AEG-Elotherm GmbH**
**Hammesberger Strasse 31**
**D-42855 Remscheid(DE)**

(72) Erfinder: **Matthes, Hans Georg**
**Lukasstrasse 7**
**D-5632 Wermelskirchen(DE)**

(74) Vertreter: **Cohausz & Florack Patentanwälte**
**Postfach 14 01 61**
**D-40071 Düsseldorf (DE)**

# Beschreibung

Die Erfindung betrifft ein Verfahren zum induktiven Erwärmen von Werkstücken, die an einem von einem Parallelschwingkreis gespeisten Induktor angekoppelt sind, bei dem von einer ersten Meßeinrichtung die dem Schwingkreis zugeführte Wirkleistung $P_{MF}$, von einer zweiten Meßeinrichtung der im Schwingkreis fließende Strom und daraus die Schwingkreis-Verlustleistung $P_{VT}$ gemessen werden und bei dem aus der Differenz beider Leistungen $P_{MF}, P_{VT}$ die dem Werkstück zugeführte Wirkleistung $P_{WS}$ berechnet wird.

Beim induktiven Erwärmen von Werkstücken ist man bestrebt, ein definiertes Temperaturprofil während des Erwärmungsvorganges zu erhalten, da hiervon die Qualität des durch den Erwämungsvorgang behandelten Werkstückes entscheidend abhängt. Die den Temperaturverlauf entscheidend bestimmende Größe ist die dem Werkstück zugeführte Wirkleistung.

Bei einer aus der DE-OS 3625011 bekannten Vorrichtung wird zur Kontrolle der in das Werkstück eingespeisten Wirkleistung die in den Schwingkreis von Umrichter abgegebene Wirkleistung gemessen. Dieser gemessene Wert enthält jedoch neben der dem Werkstück induktiv zugeführten Wirkleistung zusätzlich die Verlustleistung des Schwingkreises. Es hat sich herausgestellt, daß allein die in den Schwingkreis abgegebene Leistung aufgrund der Verfälschung durch die im Schwingkreis entstehende Verlustleistung nicht hinreichend zur Prozeßführung beim induktiven Erwärmen von Metallen ist. Wenn nämlich bei ansonsten gleichen elektrischen Induktorwerten der Kopplungsabstand zwischen Werkstück und Induktor verändert wird, wirkt sich dies auf die dem Schwingkreis zugeführte Leistung kaum wahrnehmbar aus. Der Grund hierfür ist, daß der Phasenverschiebungswinkel zwischen Strom und Spannung im Schwingkreis größer wird, so daß bei gleicher Schwingkreisspannung der Schwingkreisstrom ansteigt und damit quadratisch proportional die Verlustleistung im Schwingkreis. Insgesamt ergibt sich hierdurch eine nahezu unveränderte in den gesamten Schwingkreis eingespeiste Wirkleistung, so daß die technologisch bedeutsame Änderung der Werkstückwirkleistungsaufnahme nicht oder nur unzureichend erkannt wird.

Ein Verfahren der eingangs genannten Art ist aus der EP 0251333 bekannt. Hierbei wird die dem Schwingkreis zugeführte Leistung $P_{MF}$ und die Schwingkreis-Verlustleistung $P_{VT}$ durch Abtastung von Stromwerten in bestimmten Zeitintervallen und Auswertung der hieraus ermittelten Kurvenform des jeweiligen Stromes durch stetige Berechnung der jeweiligen Leistungswerte ermittelt. Eine solche stetige Berechnung zu jedem Abtastzeitpunkt ist rechnerisch aufwendig.

Der Erfindung liegt die Aufgabe zugrunde, eine Erfassung der dem Werkstück zugeführten Wirkleistung auf einfache Weise zu ermöglichen.

Die Aufgabe wird erfindungsgemäß bei einem Verfahren der eingangs genannten Art dadurch gelöst, daß die Schwingkreis-Verlustleistung $P_{VT}$ berechnet wird aus dem Produkt des quadrierten, von der zweiten Meßeinrichtung gemessenen Stromes $I_{SK}2$ und des Wirkwiderstandes des Schwingkreises $R_{VT}$, d.h. $P_{VT} = I_{SK}2R_{VT}$, wobei der Wirkwiderstandswert $R_{Vt}$ berechnet wird aus dem Produkt des in einem Leerlaufversuch ermittelten Verhältnisses $R_{Vo}$ und der Wurzel aus dem Verhältnis der jeweiligen Betriebsfrequenz $f_T$ und der Eigenfrequenz $f_o$ des Schwingkreises, d.h. $R_{VT} = R_{Vo}\sqrt{f_T/f_o}$, wobei das in einem Leerlaufversuch ermittelte Verhältnis $R_{Vo}$ aus der bei Leerlauf in den Schwingkreis 2 eingespeisten Wirkleistung $P_{MFo}$ und dem Quadrat des unter gleichen Bedingungen im Schwingkreis 2 fließenden Stromes $I_{SKo}$ berechnet wird.

Der Erfindung liegt die Überlegung zugrunde, daß die Separation der allein auf den Schwingkreis zurückführbaren Wirkleistung einerseits und zum anderen der allein auf das Werkstück zurückführbaren Wirkleistungsverluste andererseits dadurch erfolgt, daß bei leerem Induktor, also ohne Einfluß der Verluste des Werkstückes, der Wirkwiderstandswert $R_{VO}$, welcher dann nur durch den Schwingkreis bedingt ist, vorab bestimmt wird. Dieser abgespeicherte Wert ist im folgenden Grundlage für die Korrektur der allein der direkten Messung zugänglichen in den Schwingkreis abgegebenen Wirkleistung. Über die an sich bekannte Beziehung $R_{VT} = R_{VO}\sqrt{f_T/f_o}$ ist der bei einer beliebigen Betriebsfrequenz $f_T$ des Umrichters wirksame Wirkwiderstand mit dem bei Leerlauf gemessenen Wirkwiderstand $R_{VO}$, dessen Messung bei der Eigenfrequenz $f_o$ des Schwingkreises erfolgt, verknüpft und damit zu berechnen.

Durch diese Frequenzkompensation kann die in jedem Prozeßzustand im Schwingkreis entstehende Verlustleistung dadurch berechnet werden, daß der korrigierte Wirkwiderstandswert $R_{VT}$ mit dem Quadrat des jeweiligen Schwingkreisstromes $I_{SKT}$ multipliziert wird.

Gemäß bevorzugten Ausführungsformen der Erfindung werden die zur Ermittlung der in das Werkstück eingespeisten Wirkleistung $P_{WS}$ erforderlichen Meß- und Rechenvorgänge mittels elektronischer Schaltkreise realisiert. Dies bietet den Vorteil, daß hierdurch die Messungen auch bei schnellen oder extrem langsamen Veränderungen zuverlässig durchgeführt werden können, was bei herkömmlichen analogen Meßgeräten nicht gewährleistet ist. Somit ergibt sich eine weitaus höhere Betriebssicherheit verbunden mit einem erweiterten Automatisierungsgrad.

Der besondere Vorteil einer bevorzugten Ausführungsform des erfindungsgemäßen Verfahrens besteht darin, daß die an einem ersten, sogenannten Meisterstück, ermittelte Folge von Meßwerten für die in das Werkstück eingespeiste Leistung in Abhängigkeit von der Dauer des Prozesses im folgenden für die Bearbeitung weiterer Werkstücke als Sollwertprofilkurve dient. Somit ist gewährleistet, daß, wenn die nachfolgenden Werkstücke nach derselben Sollwertkurve, die für das Meisterstück als optimal erachtet wurde, hergestellt werden, diese ebenfalls mit hinreichend guter Qualität bearbeitbar sind. Durch Vergleich des jeweiligen Ist-Wertes mit dem zugehörigen Soll-Wert des Sollwertprofils ergibt sich, ob der jeweilige Bearbeitungswert genügend genau eingehalten wird. Bei noch nicht allzu großer Abweichung kann dann beispielsweise lediglich eine Warnung an die Bedienungsperson ergehen, ohne daß der Bearbeitungsprozeß unterbrochen wird, so daß die Bedienungsperson angehalten wird festzustellen, ob und gegebenenfalls wodurch der Prozeß gestört wird.

Erst wenn die Abweichungen oberhalb einer vorgebbaren Abschaltgrenze liegen, wird der Prozeß unterbrochen, um eine mögliche Schädigung des Werkstückes zu vermeiden.

Als besondere Ausführungsform umfaßt die Erfindung auch die Möglichkeit, die jeweiligen Soll- bzw. Ist-Werte einem Regler zuzuführen, dessen Ausgangssignal bewirkt, daß eine auftretende Regelabweichung ausgeglichen wird, so daß der Ist-Wert in jedem Zeitabschnitt dem vorgegebenen Soll-Wert nachgeführt wird.

Bei einer besonderen Verwendung des erfindungsgemäßen Verfahrens für Härtevorgänge bei Lagern läßt sich werkstückgebunden jeweils der ideale Härtevorgang ermitteln und speichern, so daß bei jedem nachfolgenden Härtevorgang der aktuelle Verlauf der in das Werkstück eingespeisten Leistung überwacht und mit dem Sollwertprofil verglichen werden kann. Falls Abweichungen vom Sollprofil auftreten, lassen sich Ursachen hierfür ermitteln, beispielsweise ein zu geringer oder ein zu großer Kopplungsspalt zwischen Werkstück und Induktor oder das Fehlen von Konzentratoren für das induzierte elektromagnetische Feld.

Die Erfindung wird im folgenden anhand einer ein Ausführungsbeispiel darstellenden Zeichnung näher erläutert.

Dabei zeigen

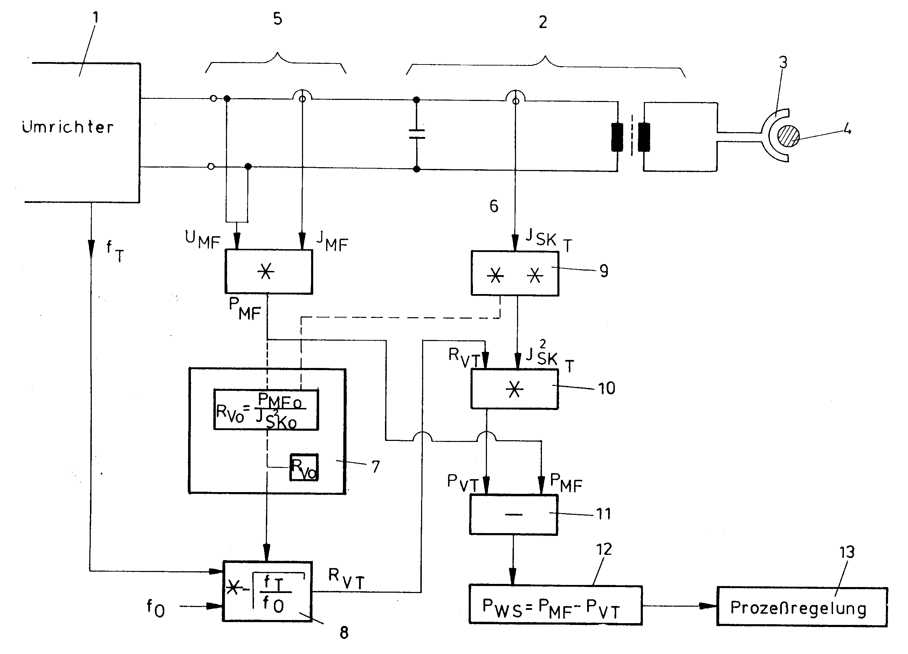

Fig. 1 ein Blockschaltbild der erfindungsgemäßen Vorrichtung zum induktiven Erwärmen von Werkstücken.

Fig. 2 ein Meßwertprofil für die gesamte in den Schwingkreis eingespeiste Leistung in Abhängigkeit von der Zeit des Bearbeitungsvorganges, jeweils dargestellt für drei unterschiedliche Kopplungsfaktoren und

Fig. 3 ein Meßwertprofil, wenn nur die an das Werkstück abgegebene Wirkleistung in Abhängigkeit von der Bearbeitungsdauer untersucht wird, jeweils wiederum für drei unterschiedliche Kopplungsfaktoren.

Ein Umrichter 1 speist einen Parallelschwingkreis 2, welcher aus kapazitiven, induktiven und ohmschen Elementen besteht. Am Ausgang des Parallelschwingkreises 2 ist induktiv angekoppelt über einen Induktor 3 ein zu erwärmendes Werkstück 4. Je nach Abstand des Werkstückes 4 zum Induktor 3 läßt sich unterschiedliche Kopplung verwirklichen. Die am Eingang des Schwingkreises 2 in diesen vom Umrichter 1 eingespeiste elektrische Wirkleistung $P_{MF}$ wird mittels der ersten Meßeinrichtung 5 ermittelt. Diese besteht zum einen aus einer Spannungsmeßeinrichtung für die Mittelfrequenzspannung $U_{MF}$ und zum anderen aus einem Stromwandler zur Bestimmung des in den Schwingkreis 2 einfließenden Wirkstromes $I_{MF}$. Durch Multiplikation beider Meßgrößen ergibt sich die gesamte in den Schwingkreis 2 eingespeiste Leistung $P_{MF}$. Eine weitere Meßeinrichtung 6 mißt den im Schwingkreis 2 fließenden Schwingkreisstrom $I_{SK}$ bei der jeweiligen Frequenz $f_T$. Dieser Meßwert wird in einem Quadrierer 9 quadriert. Der Ausgang der ersten Meßeinrichtung 5 ist wahlweise mit einem Speicher 7 (gestrichelte Linie) oder mit einem Differenzbildner 11 (durchgezogene Linie) verbunden. Der Ausgang des Quadrierers 9 ist wahlweise mit dem Speicher 7 (gestrichelte Linie) oder mit einem weiteren Multiplizierer 10 (durchgezogene Linie) verbunden. Der Ausgang des Festwertspeichers 7 wird auf einen ersten Multiplizierer 8 geschaltet, dem als Eingangsgrößen die jeweilige Betriebsfrequenz des Umrichters 1 und der im Leerlauffall gemessene Wert für die Eigenfrequenz $f_0$ des Schwingkreises 2 eingegeben werden.

Der Ausgang des ersten Multiplizierers 8 ist mit dem Eingang des weiteren Multiplizierers 10 verbunden derart, daß als Ausgangsgröße des weiteren Multiplizierers 10 das Produkt aus dem quadrierten Schwingkreisstrom und dem bei der jeweiligen Betriebsfrequenz maßgeblichen Wirkwiderstand $R_{VT}$ erscheint.

Durch Differenzbildung der Größen $P_{VT}$ und $P_{MF}$ erscheint am Ausgang des Differenzbildners 11 der Wert für die in das Werkstück 4 vom Induktor 3 eingespeiste Leistung $P_{WS}$. Diese Größe kann auf eine Anzeige- oder Registriervorrichtung 12 der Bedienungsperson kundbar gemacht werden und im folgenden zur Prozeßsteuerung 13 verwendet werden.

Die Funktionsweise der beschriebenen Vorrichtung wird im folgenden dargestellt:

Zunächst wird bei ungefülltem Induktor 3 der Wirkwiderstandsanteil $R_{VO}$ des Parallelschwingkreises 2 bestimmt. Hierzu erfolgt die Verbindung der einzelnen Bausteine in der durch die gestrichelten Linien dargestellten Form. Aus der bei Leerlauf in den Schwingkreis 2 eingespeisten Wirkleistung $P_{MFO}$ und dem Quadrat des unter gleichen Bedingungen im Schwingkreis fliedenden Stromes $I_{SKO}$ wird in dem dem Speicher 7 vorgeschalteten Dividierer der Quotient gebildet, welcher dem Wirkwiderstand $R_{VO}$ des Schwingkreises im Leerlauf entspricht. Dieser Wert wird ebenso wie die im Leerlauffall gemessene Eigenfrequenz $f_O$ im Speicher 7 abgespeichert.

Zu Beginn des nun folgenden Erwärmungsprozesses, während dessen sich das Werkstück 4 im Induktor 3 befindet, wird die Verschaltung der Komponenten der Auswerteeinheit entsprechend den durchgezogenen Linien vorgenommen.

Aus dem fest vorgegebenen Speicherwert $R_{VO}$ wird im ersten Multiplizierer 8 der korrigierte Wirkwiderstand $R_{VT}$ bei der jeweiligen Betriebsfrequenz $f_T$ des Schwingkreises 2 berechnet. Die Frequenz $f_T$ weicht dabei umso mehr von der Eigenfrequenz $f_O$ des Schwingkreises 2 ab, desto höher die Bedämpfung des Schwingkreises ist. Dabei richtet sich die Frequenz $f_T$ nach der noch minimal möglichen Löschzeit der Thyristoren im Umrichter 1.

Der korrigierte Wirkwiderstand $R_{VT}$ wird im zweiten Multiplizierer 10 mit dem Quadrat des aktuellen Schwingkreistromes $I_{SKT}$ multipliziert. Das vom weiteren Multiplizierer 10 ermittelte Produkt entspricht somit genau der im Schwingkreis 2 verbrauchten Wirkleistung $P_{VT}$ zum jeweiligen Verfahrenszeitpunkt. Da die zum gleichen Zeitpunkt gehörige insgesamt in den Schwingkreis 2 eingespeiste Wirkleistung $P_{MF}$ ebenfalls aus der Messung der ersten Meßeinrichtung 5 bekannt ist, ergibt sich durch einfache Subtraktion beider Größen im Differenzbildner 11 die momentan in das Werkstück 4 vom Induktor 3 eingespeiste Wirkleistung $P_{WS}$.

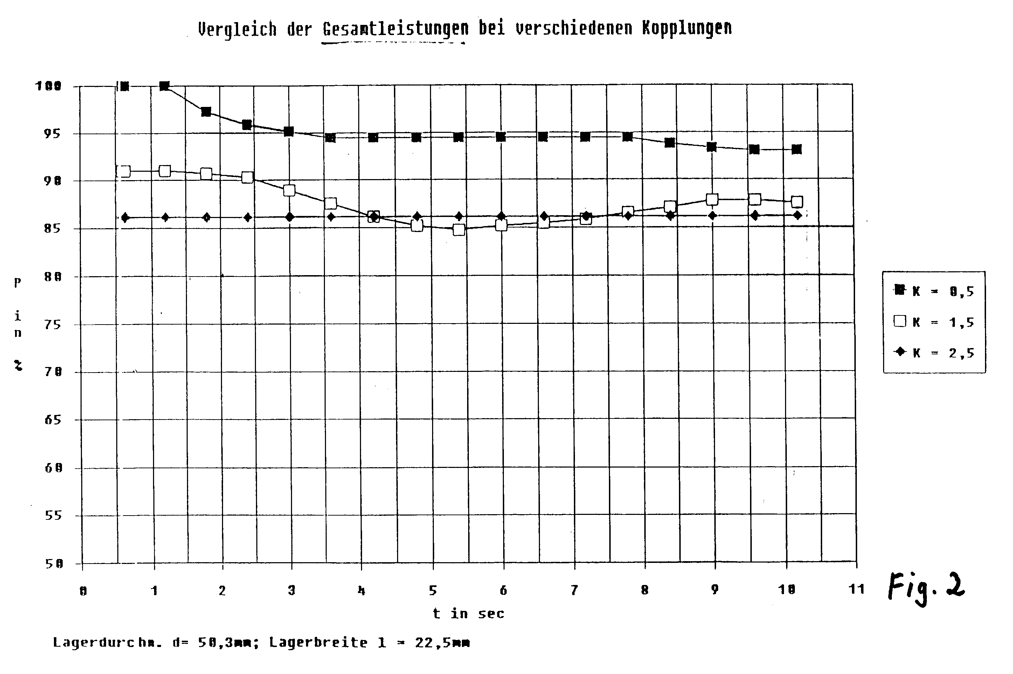

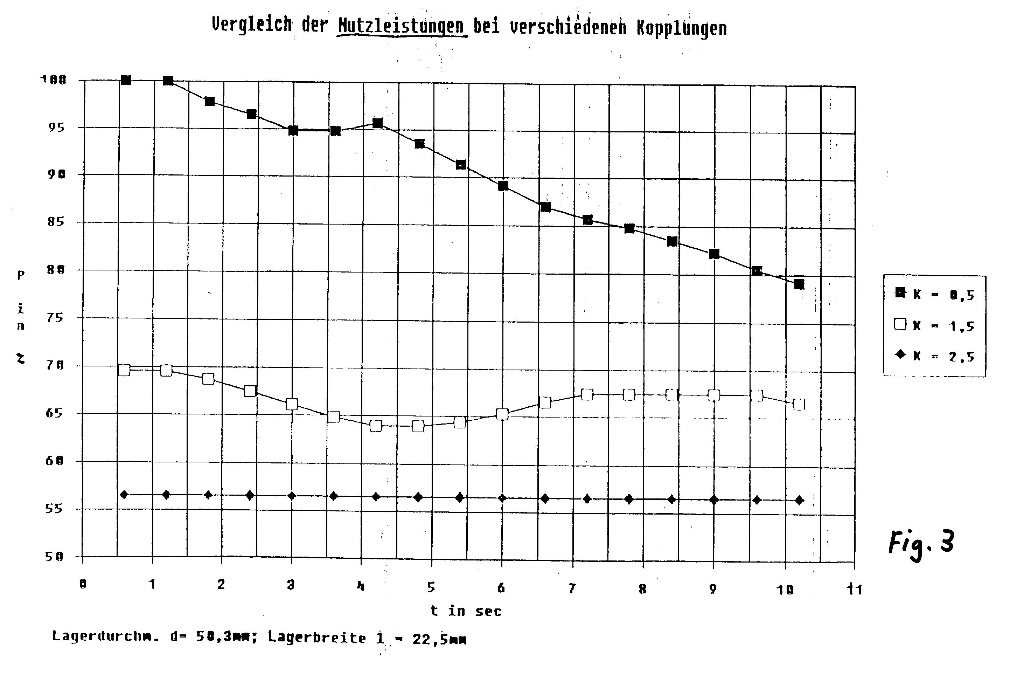

Im Laufe des Erwärmungsprozesses erfolgt somit eine kontinuierliche Messung der Größe $P_{WS}$ in Abhängigkeit von der Bearbeitungsdauer t. Die Figuren 2 und 3 zeigen beispielhaft solche Meßdiagramme in Abhängigkeit von der Bearbeitungszeit. Dabei zeigt Figur 2 den Verlauf der gesamten in den Schwingkreis eingespeisten Wirkleistung, d.h. die Ausgangsgröße $P_{MF}$ der ersten Meßeinrichtung 5. Im Meßdiagramm der Figuren 2 und 3 sind unterschiedliche Kurven dargestellt, die sich jeweils für unterschiedliche Kopplungsabstände ergeben, wobei der Kopplungsabstand 0,5 die engste Kopplung zwischen Werkstück und Induktor beschreibt.

Daß die in Figur 2 dargestellte Analyse der Gesamtleistung für den Erwärmungsprozeß nicht hinreichend genau ist, ergibt sich beim Vergleich der Figur 2 mit Figur 3. Dabei zeigt Figur 3 die in das Werkstück eingespeiste Wirkleistung in Abhängigkeit von der Zeit, wiederum jeweils für entsprechende Kopplungsabstände 0,5, 1,5, 2,5. Der Vergleich zeigt, daß, betrachtet man z.B. den Verlauf für K = 0,5, die die Gesamtleistung wiedergebende Kurve in Figur 2 den Eindruck vermittelt, die in das Werkstück abgegebene Leistung verändere sich nicht. Demgegenüber zeigt Figur 3 einen deutlichen Abfall auf unter 80 %.

Hieraus lassen sich Erkenntnisse über technologisch wichtige Größen herleiten. Insgesamt erhöht sich also durch die erfindungsgemäße Vorrichtung bzw. das in ihr angewandte Verfahren die Genauigkeit für die Analyse des Erwärmungsvorganges.

**Patentansprüche**

1.  Verfahren zum induktiven Erwärmen von Werkstücken, die an einen von einem Parallelschwingkreis gespeisten Induktor angekoppelt sind, bei dem von einer ersten Meßeinrichtung die dem Schwingkreis zugeführte Wirkleistung ($P_{MF}$), von einer zweiten Meßeinrichtung der im Schwingkreis fließende Strom ($I_{SK}$) und daraus die SchwingkreisVerlustleistung ($P_{VT}$) gemessen werden und bei dem aus der Differenz beider Leistungen ($P_{MF}, P_{VT}$) die dem Werkstück zugeführte Wirkleistung ($P_{WS}$) berechnet wird, **dadurch gekennzeichnet,** daß die Schwingkreis-Verlustleistung ($P_{VT}$) berechnet wird aus dem Produkt des quadrierten, von der zweiten Meßeinrichtung gemessenen Stromes ($I_{SK}^2$) und des Wirkwiderstandes des Schwingkreises ($R_{VT}$), d.h. $P_{VT} = I_{SK}^2 R_{VT}$, wobei der Wirkwiderstandswert ($R_{Vt}$) berechnet wird aus dem Produkt des in einem Leerlaufversuch ermittelten Verhältnisses ($R_{Vo}$) und der Wurzel aus dem Verhältnis der jeweiligen Betriebsfrequenz ($f_T$) und der Eigenfrequenz ($f_o$) des Schwingkreises, d.h. $R_{VT} = R_{Vo} \sqrt{f_T/f_o}$, wobei das in einem Leerlaufversuch ermittelte Verhältnis ($R_{Vo}$) aus der bei Leerlauf in den Schwingkreis (2) eingespeisten Wirkleistung ($P_{MFo}$) und dem Quadrat des unter gleichen Bedingungen im Schwingkreis (2) fließenden Stromes ($I_{SKo}$) berechnet wird.

2.  Verfahren nach Anspruch 1, **dadurch gekennzeichnet,** daß aus der an einem Meisterstück experimentell ermittelten zeitlichen Folge der Werte für die in das Werkstück (4) eingespeisten Leistung ($P_{WS}$) eine Sollwertfolge als Vorgabeprofil für den zeitlichen Verlauf der Leistung ($P_{WS}$) der nachfolgend bearbeiteten Werkstücke gebildet wird.

3. Verfahren nach Anspruch 1 oder 2, **dadurch gekennzeichnet,** daß die Abweichung des jeweiligen Ist-Wertes der in das Werkstück eingespeisten Leistung ($P_{WS}$) vom jeweiligen Soll-Wert des Vorgabeprofils gemessen wird und bei Abweichung über einen vorgebbaren ersten Abstand hinaus eine Warnung an die Bedienungsperson erfolgt.

4. Verfahren nach einem der Ansprüche 1 bis 3, **dadurch gekennzeichnet,** daß bei Abweichung des jeweiligen Ist-Wertes vom vorgegebenen Soll-Wert über einen vorgebbaren zweiten Abstand, der größer ist als der erste Abstand, hinaus ein Abbruch des Bearbeitungsvorganges erfolgt.

5. Verfahren nach einem der Ansprüche 1 bis 4, **dadurch gekennzeichnet,** daß Ist-Wert und Soll-Wert als Eingangsgrößen einem Regler derart zugeführt werden, daß der Ist-Wert entsprechend dem jeweiligen Sollwert nachgeführt wird.

6. Vorrichtung zur Durchführung des Verfahrens nach einem der Ansprüche 1 bis 5, bestehend aus einem den induktiven Teil eines von einem drehstromgespeisten Umrichter (1) versorgten Parallelschwingkreises (2) bildenden Induktor (3), mit dem das zu erwärmende Werkstück (4) unter einem vorgebbaren Kopplungsabstand (K) koppelbar ist, einer Meßeinrichtung (5) für die dem Schwingkreis (2) zugeführte Wirkleistung ($P_{MF}$), und einer weiteren Meßeinrichtung (6) für den im Schwingkreis (2) fließenden Strom ($I_{SK}$) sowie eine Auswerteeinheit (7-12), mittels der die dem Werkstück (4) zugeführte Wirkleistung ($P_{WS}$) ermittelt wird, dadurch gekennzeichnet, daß die dem Werkstück (4) zugeführte Wirkleistung ($P_{WS}$) derart ermittelt wird, daß der von der einen Meßeinrichtung (5) ermittelte Meßwert ($P_{MF}$) vermindert wird um das Produkt aus dem Quadrat des von der weiteren Meßeinrichtung (6) ermittelten Meßwertes ($I_{SK}$) und dem Wert des Wirkwiderstandes ($R_{VT}$) des Schwingkreises (2), welcher sich nach der Beziehung $R_{VT} = R_{VO} \sqrt{f_T/f_o}$ ergibt, wobei ($R_{VO}$) dem Wirkwiderstandes des Schwingkreises (2) ohne Werkstück (4) im Induktor (3) und das Verhältnis $f_T/f_o$ dem Verhältnis der momentanen Betriebsfrequenz des Schwingkreises (2) zur Eigenfrequenz des Schwingkreises (2) entspricht, wobei die weitere Meßeinrichtung (6) ein induktiver Stromwandler ist, der den Wirkanteil des im Parallelschwingkreis fließenden Kreisstromes ($I_{SK}$) mißt und wobei der weiteren Meßeinrichtung (6) ein Quadrierer (9) nachgeschaltet ist, der das Quadrat des Schwingkreisstromes ($I_{SK}$) bildet.

7. Vorrichtung nach Anspruch 6, **dadurch gekennzeichnet,** daß die Auswerteeinheit einen Speicher (7) enthält, in welchem der durch Division der Ausgangssignale der einen Meßeinrichtung (5) und des Quadrierers (9), jeweils bei Leerlauf des Induktors (3), ermittelte Wirkwiderstand ($R_{VO}$) abgespeichert ist.

8. Vorrichtung nach einem der Ansprüche 6 oder 7, **dadurch gekennzeichnet,** daß die Auswerteeinheit einen ersten Multiplizierer (8) enthält, welcher aus dem Speicherwert ($R_{VO}$) und dem Verhältnis der jeweiligen Betriebsfrequenz ($f_T$) des Umrichters zur Eigenfrequenz ($f_o$) des Schwingkreises (2) den korrigierten Wirkwiderstandswert ($R_{VT}$) des Schwingkreises (2) ermittelt.

9. Vorrichtung nach einem der Ansprüche 6 bis 8, **dadurch gekennzeichnet,** daß die Auswerteeinheit einen weiteren Multiplizierer (10) enthält, welcher aus dem Ausgangswert des ersten Multiplizierers (8) und dem Ausgangswert des Quadrierers (11) die Verlustleistung ($P_{VT}$) des Schwingkreises (2) berechnet.

10. Vorrichtung nach einem der Ansprüche 6 bis 9, **dadurch gekennzeichnet,** daß die Auswerteeinheit einen Differenzbildner (11) zur Berechnung der vom Werkstück (4) aufgenommenen Wirkleistung ($P_{WS}$) enthält, an dessen Eingang die Ausgangssignale der einen Meßeinrichtung (5) und des weiteren Multiplizierers (10) anliegen.

11. Vorrichtung nach einem der Ansprüche 6 bis 10, **dadurch gekennzeichnet,** daß das Ausgangssignal des Differenzbildners (11) auf eine Anzeige- oder Registriereinheit (12) ausgegeben wird.

12. Vorrichtung nach einem der Ansprüche 6 bis 11, **dadurch gekennzeichnet,** daß die Auswerteeinheit eine Steuerschaltung aufweist, die im Leerlauf des Induktors (3) den Ausgang des Quadrierers (9) und den Ausgang der einen Meßeinrichtung (5) mit dem Speicher (7) zur Berechnung des Wirkwiderstandes ($R_{VO}$) und im Lastbetrieb den Ausgang des Quadrierers (9) mit dem Eingang des weiteren Multiplizierers (10), den Ausgang des einen Multiplizierers (8) mit den Eingang des weiteren Multiplizierers (10) und den Ausgang der einen Meßeinrichtung (5) mit dem Eingang des Differenzbildners (11) verbindet.

## Claims

1. A method for the inductive heating of workpieces coupled to an inductor supplied from a parallel resonant circuit, wherein the true power ($P_{MF}$) supplied to the resonant circuit is measured by a first measuring device, the current ($I_{SK}$) flowing in the resonant circuit is measured by a second measuring device, the leakage power ($P_{VT}$) of the resonant circuit being measured therefrom, and wherein the true power ($P_{WS}$) supplied to the workpiece is calculated from the difference between the two powers ($P_{MF}$, $P_{VT}$), characterized in that the leakage power ($P_{VT}$) of the resonant circuit is calculated from the product of the squared current ($I_{SK}2$) measured by the second measuring device and the actual resistance of the resonant circuit ($R_{VT}$) - i.e., $P_{VT} - I_{SK}^2 R_{VT}$, the actual resistance value ($R_{VT}$) is calculated from the product of the ratio ($R_{Vo}$) determined in a no-load test and the root of the ratio between the particular operating frequency ($f_T$) and the natural frequency ($f_o$) of the resonant circuit - i.e., $R_{VT} = R_{Vo}\sqrt{f_T/f_o}$, and the ratio ($R_{Vo}$) determined in a no-load test is calculated from the true power ($P_{MFo}$) supplied to the resonant circuit (2) during no-load operation and the square of the current ($I_{SKo}$) flowing in the resonant circuit (2) in identical conditions.

2. A method according to claim 1, characterized in that for the power ($P_{WS}$) supplied to the workpiece (4) a required value sequence is formed as the allowed profile for the course in time of the power ($P_{WS}$) of the workpieces subsequently processed is formed from the sequence of values in time determined experimentally on a master piece.

3. A method according to claims 1 or 2, characterized in that the difference of the particular actual value of the power ($P_{WS}$) supplied to the workpiece from the particular required value of the allowed profile is measured, and if a difference is found beyond an allowable first distance, a warning is delivered to the operator.

4. A method according to one of claims 1 to 3, characterized in that if a difference from the allowed required value of the particular actual value is found beyond an allowable second distance which is greater than the first distance, the processing operation is broken off.

5. A method according to one of claims 1 to 4, characterized in that the actual value and required value are so supplied as input values to a controller that the actual value follows up in accordance with the particular required value.

6. A device for the performance of the method according to one of claims 1 to 5, comprising: an inductor (3) which forms the inductive part of a parallel resonant circuit (2) supplied from a frequency converter (1) supplied with rotary current and to which the workpiece (4) to be heated can be coupled at an allowable coupling distance (K); a measuring device (5) for the true power ($P_{MF}$) supplied to the resonant circuit (2); a further measuring device (6) for the current ($I_{SK}$) flowing in the resonant circuit (2); and an evaluating unit (7-12) by means of which the true power ($P_{WS}$) supplied to the workpiece (4) is determined, characterized in that the true power ($P_{WS}$) supplied to the workpiece (4) is determined by reducing the measured value ($P_{MF}$) determined by one measuring device (5) by the product of the square of the measured value ($I_{SK}$) determined by the further measuring device (6) and the value of the actual resistance ($R_{VT}$) of the resonant circuit (2), said value being obtained in accordance with the relation $R_{VT} = R_{Vo}\sqrt{f_T/f_o}$, ($R_{Vo}$) corresponding to the actual resistance of the resonant circuit (2) without workpiece (4) in the inductor (3) and the ratio $f_T/f_o$ corresponding to the ratio of the momentary operating frequency of the resonant circuit (2) and the natural frequency of the resonant circuit (2), while the further measuring device (6) is an inductive current transducer which measures the active component of the circuit current ($I_{SK}$) flowing in the parallel resonant circuit, a squarer (9) which forms the square of the resonant circuit current ($I_{SK}$) being connected to the further measuring device (6).

7. A device according to claim 6, characterized in that the evaluating unit comprises a store (7) in which the actual resistance ($R_{Vo}$) is stored which is determined by dividing the output signals of one measuring device (5) and the squarer (9), with no-load operation of the inductor (3).

8. A device according to one of claims 6 or 7, characterized in that the evaluating unit comprises a first multiplier (8) which determines the corrected actual resistance value ($R_{VT}$) of the resonant circuit (2) from the store value ($R_{Vo}$) and the ratio between the particular operating frequency ($f_T$) of the frequency converter and the natural frequency ($f_o$) of the resonant circuit (2).

9. A device according to one of claims 6 to 8, characterized in that the evaluating unit comprises a further multiplier (10) which calculates the power loss ($P_{VT}$) of the resonant circuit (2) from the output value of the first multiplier (8) and the output value of the squarer (11).

10. A device according to one of claims 6 to 9, characterized in that the evaluating unit comprises a subtractor (11) for calculating the true power ($P_{WS}$) absorbed by the workpiece (4), the output signals of one measuring device (5) and the further multiplier (10) being applied to its input.

11. A device according to one of claims 6 to 10, characterized in that the output signal of the subtractor (11)is outputted to a display or recording unit (12).

12. A device according to one of claims 6 to 11, characterized in that the evaluating unit has a control circuit which, with the inductor (3) in no-load operation, connects the output of the squarer (9) and the output of one measuring device (5) to the store (7) for calculating the actual resistance ($R_{Vo}$), and when the inductor is operated under load, connects the output of the squarer (9) to the input of the further multiplier (10), the output of one multiplier (8) to the input of the further multiplier (10), and the output of one measuring device (5) to the input of the subtractor (11).

**Revendications**

1. Procédé de chauffage inductif de pièces à usiner, qui sont couplées à un inducteur alimenté par un circuit oscillant parallèle, selon lequel la puissance active ($P_{MF}$) envoyée au circuit oscillant est mesurée par un premier dispositif de mesure, le courant ($I_{SK}$) circulant dans le circuit oscillant est mesuré par un second dispositif de mesure, et, à partir de là, la puissance dissipée ($P_{VT}$) du circuit oscillant est mesurée, et selon lequel la puissance active ($P_{WS}$) envoyée à la pièce à usiner est calculée à partir de la différence des deux puissances ($P_{MF}$, $P_{VT}$), caractérisé en ce que la puissance dissipée ($P_{VT}$) du circuit oscillant est calculée à partir du produit du courant mesuré par le second dispositif de mesure et élevé au

carré ($I_{SK}^2$), par la résistance active du circuit oscillant ($R_{VT}$), c'est-à-dire $P_{VT} - I_{SK}^2 . R_{VT}$, la valeur ($R_{vt}$) de la résistance active étant calculée à partir du produit de la valeur de la résistance active ($R_{Vo}$) déterminé lors d'un essai à vide, par la racine carrée du rapport de la fréquence respective de service ($f_T$) à fréquence propre ($f_o$) du circuit oscillant, c'est-à-dire $R_{VT} = R_{Vo} \sqrt{f_T/f_o}$, de la valeur de la résistance active ($R_{Vo}$) déterminé lors d'un essai à vide étant calculé à partir de la puissance active ($P_{MFo}$), introduite lors de la marche à vide dans le circuit oscillant (2), et du carré du courant ($I_{SKo}$), qui circule dans le circuit oscillant (2) dans les mêmes conditions.

2. Procédé selon la revendication 1, caractérisé en ce que l'on forme une suite de valeurs de consigne, en tant que profil prédéterminé pour la variation dans le temps de la puissance ($P_{WS}$) des pièces à usiner, qui sont usinées ultérieurement, à partir de la suite dans le temps, déterminée expérimentalement sur une pièce modèle, des valeurs de la puissance ($P_{WS}$) introduite dans la pièce à usiner (4).

3. Procédé selon la revendication 1 ou 2, caractérisé en ce que l'on mesure l'écart entre la valeur réelle respective de la puissance ($P_{WS}$), introduite dans la pièce à usiner, et la valeur de consigne respective du profil prédéterminé et une alarme est envoyée à l'opérateur dans le cas d'un écart dépassant une première valeur pouvant être prédéterminée.

4. Procédé selon l,une des revendications 1 à 3, caractérisé en ce que, dans le cas où l'écart entre la valeur réelle respective et la valeur de consigne prédéterminée dépasse une seconde valeur pouvant être prédéterminée, qui est supérieure à la première valeur pouvant être prédéterminée, on déclenche une interruption de l'opération d'usinage.

5. Procédé selon l'une des revendications 1 à 4, caractérisé en ce que la valeur réelle et la valeur de consigne sont envoyées, en tant que grandeurs d'entrée, à un régulateur de telle sorte que la valeur réelle est asservie sur la base de la valeur de consigne respective.

6. Dispositif pour la mise en oeuvre du procédé selon l'une des revendications 1 à 5, constitué par un inducteur (3), qui constitue la partie inductive d'un circuit oscillant parallèle (2) alimenté par un convertisseur statique (1) alimenté par un courant triphasé et auquel peut être couplée la pièce à usiner (4) devant être chauffée, à une distance de couplage (K) inférieure à une valeur pouvant être préde-terminée, par un premier dispositif (5) de mesure de la puissance active ($P_{MF}$) envoyée au circuit oscillant (2), et par un deuxième dispositif (6) de mesure du courant ($I_{SK}$) qui circule dans le circuit oscillant (2), ainsi que par une unité d'évaluation (7-12), à l'aide de laquelle la puissance active ($P_{WS}$) envoyée à la pièce à usiner (4) est déterminée, caractérisé en ce que la puissance active ($P_{WS}$) envoyée à la pièce à usiner (4) est déterminée de telle manière que la valeur de mesure ($P_{MF}$) déterminée par le premier dispositif de mesure (5) est diminuée du produit du carré de la valeur de mesure ($I_{SK}$), déterminée par le deuxième dispositif de mesure (6), par la valeur de la résistance active ($R_{VT}$) du circuit oscillant (2), qui est fournie par la relation $R_{VT} = R_{vo} \sqrt{f_T/f_o}$, ($R_{VO}$) correspondant à la résistance active du circuit oscillant (2) sans la pièce à usiner (4) dans l'inducteur (3) et le rapport $f_T/f_o$ correspondant au rapport de la fréquence de fonctionnement instantanée du circuit oscillant (2) à la fréquence propre de ce circuit oscillant (2), le deuxième dispositif de mesure (6) étant un transformateur d'intensité inductif, qui mesure la composante active du courant ($I_{SK}$) circulant dans le circuit oscillant parallèle et un circuit d'élévation au carré (9), qui forme le carré du courant ($I_{SK}$) du circuit oscillant, étant branché en aval du deuxième dispositif de mesure (6).

7. Dispositif selon la revendication 6, caractérisé en ce que l'unité d'évaluation contient une mémoire (7), dans laquelle est mémorisée la résistance active ($R_{VO}$) déterminée par division des signaux de sortie du premier dispositif de mesure (5) et du circuit d'élévation au carré (9), respectivement lors du fonctionnement à vide de l'inductance (3).

8. Dispositif selon l'une des revendications 6 ou 7, caractérisé en ce que l'unité d'évaluation contient un premier multiplicateur (8), qui détermine la valeur ($R_{VT}$) de la résistance active corrigée du circuit oscillant (2) à partir de la valeur ($R_{VO}$) située dans la mémoire et du rapport de la fréquence de service respective ($f_T$) du convertisseur statique à la fréquence propre ($f_o$) du circuit oscillant (2).

9. Dispositif selon l'une quelconque des revendications 6 à 8, caractérisé en ce que l'unité d'évaluation contient un deuxième multiplicateur (10), qui calcule la puissance dissipée ($P_{VT}$) du circuit oscillant (2), à partir de la valeur de sortie du premier multiplicateur (8) et de la valeur de sortie du circuit d'élévation au carré (11).

10. Dispositif selon l'une des revendications 6 à 9, caractérisé en ce que l'unité d'évaluation contient un dispositif (11) de formation d'une différence, qui sert à calculer la puissance active ($P_{WS}$) absorbée par la pièce à usiner (4) et à l'entrée duquel sont appliqués les signaux de sortie du premier dispositif de mesure (5) et du deuxième multiplicateur (10).

11. Dispositif selon l'une des revendications 6 à 10, caractérisé en ce que le signal de sortie du dispositif (11) de formation de la différence est envoyé à une unité d'affichage ou d'enregistrement (12).

12. Dispositif suivant l'une des revendications 6 à 11, caractérisé en ce que l'unité d'évaluation contient un circuit de commande, qui, lors de la marche à vide de l'inducteur (3), relie la sortie du circuit d'évaluation au carré (9) et la sortie du premier dispositif de mesure (5) à la mémoire (7) pour le calcul de la résistance active ($R_{VO}$), et, dans le cas du fonctionnement en charge, relie la sortie du circuit d'élévation au carré (9) à l'entrée du deuxième multiplicateur (10), et relie la sortie du premier multiplicateur (8) à l'entrée du deuxième multiplicateur (10), et la sortie du premier dispositif de mesure (5) à l'entrée du dispositif (11) de formation de la différence.

Vergleich der Gesamtleistungen bei verschiedenen Kopplungen

Legend:
- ■ K = 0,5
- □ K = 1,5
- ◆ K = 2,5

P in %

t in sec

Lagerdurchm. d= 50,3mm; Lagerbreite l = 22,5mm

EP 0 427 879 B1

Fig. 2

# Vergleich der Nutzleistungen bei verschiedenen Kopplungen

Legend:
- K = 0,5
- K = 1,5
- K = 2,5

EP 0 427 879 B1

Fig. 3

Lagerdurchm. d= 50,3mm; Lagerbreite l = 22,5mm